**Europäisches Patentamt**

**European Patent Office**

**Office européen des brevets**

(19)

(11) Publication number : **0 490 829 A1**

(12) # EUROPEAN PATENT APPLICATION

(21) Application number : **91830515.2**

(22) Date of filing : **25.11.91**

(51) Int. Cl.⁵ : **B62D 55/24, B62D 55/20**

(30) Priority : **07.12.90 IT 8501890**

(43) Date of publication of application :
**17.06.92 Bulletin 92/25**

(84) Designated Contracting States :
**AT BE CH DE DK ES FR GB GR LI LU NL SE**

(71) Applicant : **MAI S.P.A.**
**via Torricelli n. 8**
**I-37060 Sommacampagna (Verona) fraz.**
**Caselle (IT)**

(72) Inventor : **Mai, Renato**
**via Carso n. 4**
**I-37124 Verona (IT)**

(74) Representative : **Lanzoni, Luciano**
**c/o BUGNION S.p.A. Via G. Garibaldi n. 19**
**I-37121 Verona (IT)**

(54) **Rubber track for vehicles.**

(57) A rubber track consists of a rubber structure (1) in the form of an endless chain exhibiting on the side opposite to the tread, a series of longitudinally aligned metal inserts (3) on which rollers (4) carrying the vehicle weight rest. Each metal insert (3) is comprised of a pair of parallel plate-like elements (6) which exhibits two first flaps (9) close and parallel to each other and extending in the longitudinal direction from one side of the insert (3), and two second flaps (10) parallel to and spaced apart from each other and extending in the longitudinal direction from the opposite side of the insert (3). The first two close flaps (9) of an insert (3) are disposed between the second two spaced flaps (10) of the adjacent insert (3) so as to form a continuous support surface for the rollers (4) carrying the vehicle weight.

FIG.1

The present invention relates to a rubber track for vehicles.

This track is particularly intended for excavators, beach-cleaning means, combine harvesters and in general for all tracked vehicles usually operating off-road which, however, for various reasons need to ride on asphalt roads too. It is in fact known that a rubber track prevents the road blanket from being damaged.

It is also known that rubber are provided, in the inner part thereof opposite to the tread, with a series of metal inserts which are partly buried in the rubber, are disposed in longitudinal alignment and project vertically. There inserts act as stiff supports for the rollers carrying the vehicle weight and in addition enable the propulsion carried out by the crawler wheel.

Presently, in accordance with the known art, the metal inserts are spaced apart from one another in the longitudinal direction, for the purpose of enabling the crawler wheel to be passed round by the track while at the same time avoiding the interference that would otherwise occus between each insert and the adjacent one.

This fact involves a well-known drawback. When the rollers carrying the vehicle roll on the inserts, due to the existing discontinuities, the vehicle carries out an irregular translation motion and is subjected to continuous slight jerks. These irregularities in the vehicle forward movement give rise to the formation of vibrations at a constant frequency, which have repercussions on the whole vehicle superstructure.

A further drawback of the known art resides in that in the traditional rubber tracks the passage holes for the crawler wheel teeth have a quadrangular conformation and their size is slightly larger than that of the crawler wheel. As a result, the material (such as stones, hardened mud, etc.) deposited in the hole cannot be easily ejected, which involves the risk of wear, abrasions and possible breakages in the concerned track area, that is in the region of the crawler wheel teeth.

The main object of the present invention is therefore to overcome the above drawbacks relating to the known art, by providing a rubber track which enables a thoroughly regular translation movement of the vehicle without vibrations due to the presence of discontinuities between the inserts and also allows the material that usually enters the track holes to be easily ejected.

The foregoing and further objects are all achieved by the rubber track in question, consisting of a rubber structure in the form of an endless chain exhibiting externally on the tread side, a series of shaped reliefs and internally on the side opposite to the tread, a series of metal inserts partly buried in the rubber, longitudinally aligned and projecting relative to the lying plane of the rubber structure, said metal inserts acting as stiff supports for the rollers carrying the vehicle weight and enabling the propulsion carried out by the crawler wheel, characterized in that each of said metal plates consists of a body comprising two substantially plate-like elements disposed longitudinally to the track extension and at right angles to the lying plane of said rubber structure, said elements being disposed parallel to one another in side by side relation and joined by a substantially cylindrical connecting element perpendicular thereto, each pair of said elements forming said metal insert exhibiting two first flaps close and parallel to each other and extending in the longitudinal direction from one side of said insert, and two second flaps parallel to and spaced apart from each other and extending in the longitudinal direction from the opposite side of said insert, said first two close flaps of an insert being disposed between said second two spaced flaps of the adjacent insert so as to form a continuous support surface for said rollers.

Further features and advantages of the present invention will become more apparent from the detailed description of a preferred embodiment of the invention, given hereinafter by way of non-limiting example with reference to the accompanying drawings, in which:

   – Fig. 1 is a plan view of a portion of the track seen from the inner side thereof, opposite to the tread;
   – Fig. 2 is a plan view of a portion of the track seen from the tread side;

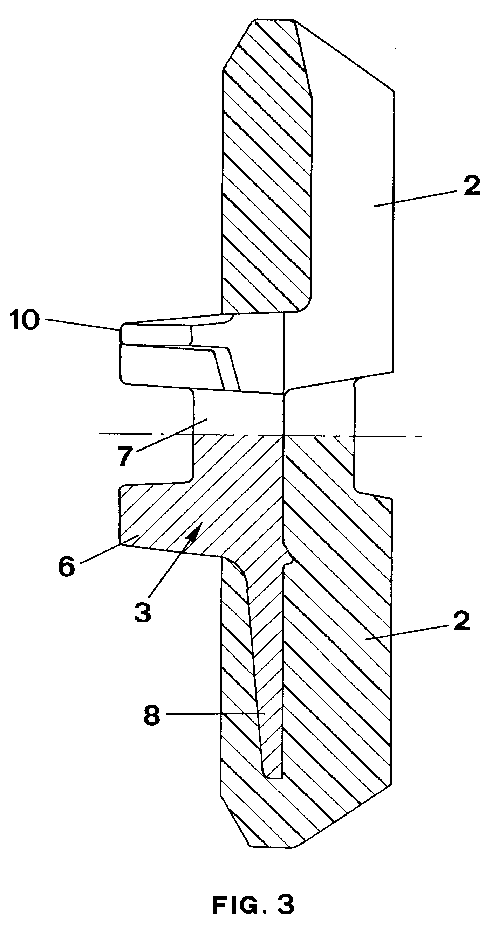

   – Fig. 3 shows a section taken along line III-III in Fig. 1;
   – Fig. 4 diagrammatically shows a longitudinal section of the track taken at the wrapping area over the crawler wheel;
   – Fig. 5 is a diagrammatic axonometric view of two adjacent metal inserts showing a part thereof external to the rubber track structure.

With reference to the drawings, a rubber endless structure giving rise to the track in question has been generally denoted by 1.

Externally on the tread side, structure 1 exhibits a series of shaped reliefs 2 and internally on the side opposite to the tread, it is provided with a series of metal inserts 3 partly buried in the rubber forming the structure itself.

The metal inserts 3 are longitudinally aligned along the track extension and project from the lying plane of the rubber structure 1.

These metal inserts 3 act as a stiff support for the rollers 4 carrying the vehicle weight and enable the propulsion carried out by the crawler wheel 5.

In greater detail, each metal insert 3 consists of a body comprising two substantially plate-like elements 6 disposed longitudinally to the track extension and at right angles to the lying plane of the rubber structure 1. These elements 6 are parallel to one another, disposed in side by side relation and joined together by a substantially cylindrical connecting element 7 perpendicular thereto.

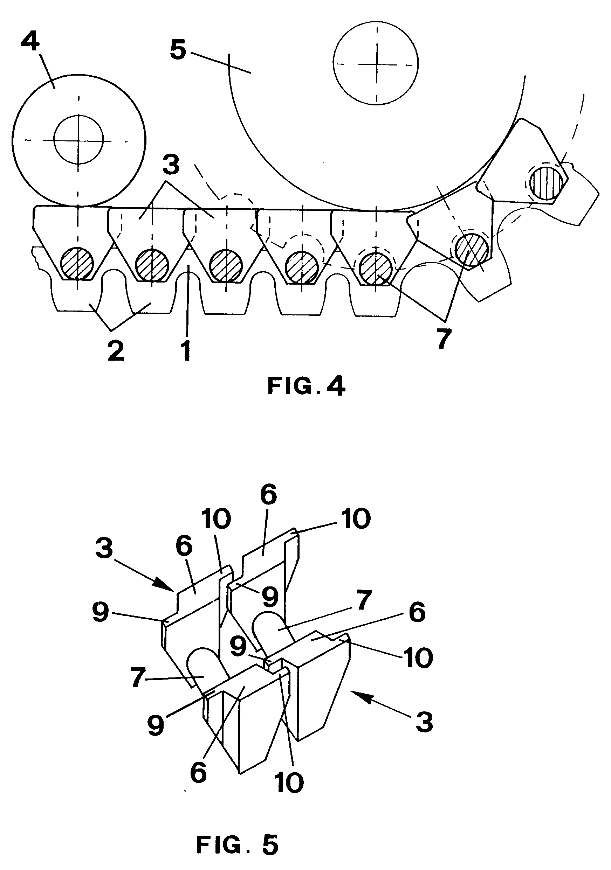

The metal inserts 3 are provided with horizontal plate-like projections 8 which are thoroughly buried in structure 1 (for the sake of simplicity they have not been shown in Fig. 5).

Each pair of elements 6 forming a metal insert 3 exhibits two first flaps parallel and close to each other and extending in the longitudinal direction from one side of the insert 3, and two second flaps 10 parallel to and spaced apart from each other and extending in the longitudinal direction from the opposite side of the insert 3.

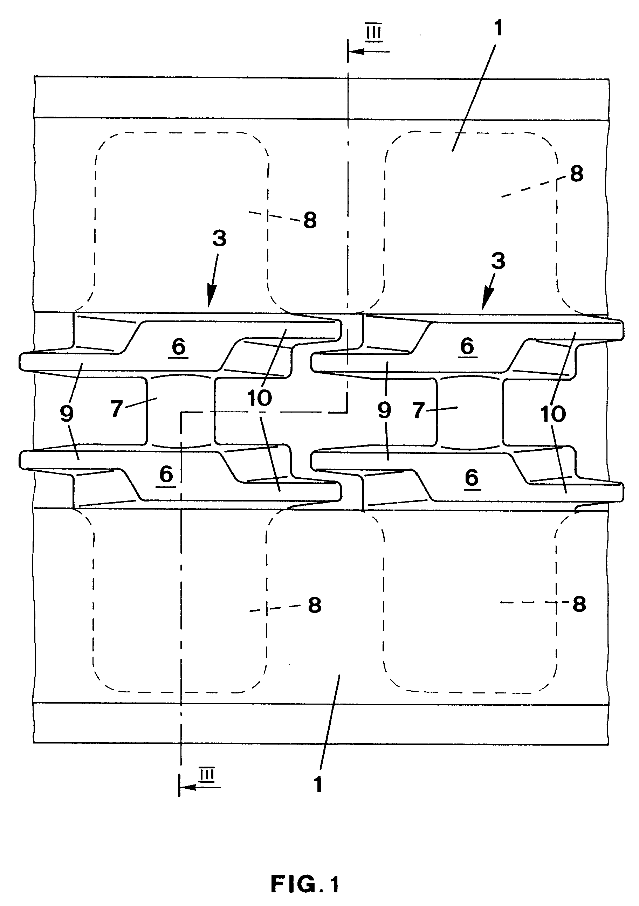

The two first close flaps 9 of an insert 3 are disposed, as shown in Fig. 1, between two second spaced flaps 10 of the adjacent insert 3 so as to form a continuous support surface for the rollers 4.

It will be noted that the inserts 3 as conceived can be wrapped over the crawler wheel 5 without any mutual interference occurring.

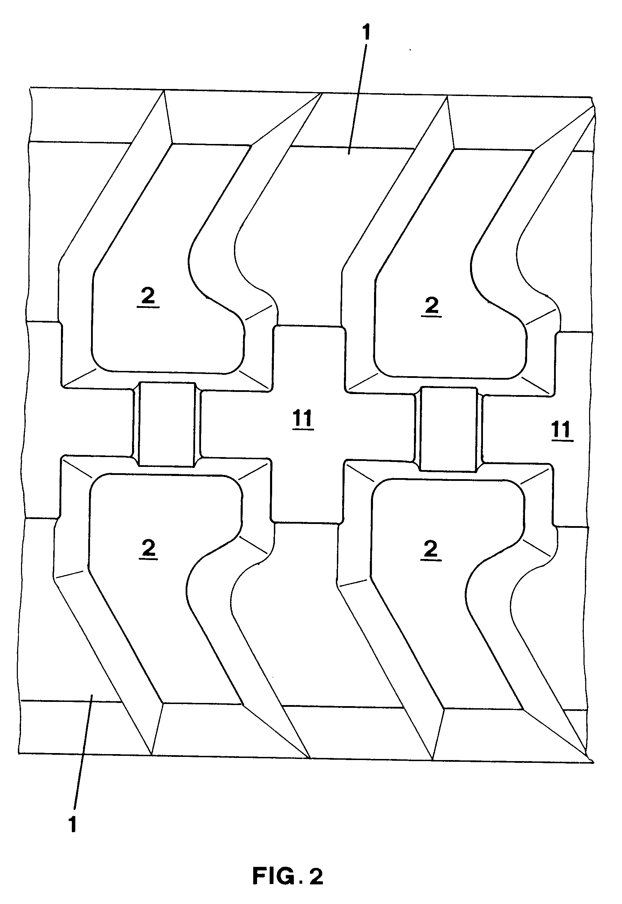

Based on a further feature of the present invention, a substantially cross-shaped hole 11 (Fig. 2) is formed in the rubber structure 1 between two adjacent metal inserts 3.

This cross-shaped conformation is made possible because the flaps 9 and 10 of each insert 3 have a downwardly tapering inclination so that the insert 3 seen in section exhibits a substantially trapezoidal outline (see Figs. 4 and 5).

The cross-shaped configuration of hole 11 enables the material stored in said hole to be easily ejected therefrom by the crawler wheel 5 teeth.

The invention attains the intended purposes.

Obviously modifications and variations may be made to the invention as conceived, all of them falling within the scope of the inventive idea. In addition, all of the details may be replaced by technically equivalent elements and the shapes and sizes as well as the materials used may be of any nature and magnitude depending upon requirements.

**Claims**

1. A rubber track for vehicles, consisting of a rubber structure (1) in the form of an endless chain exhibiting externally, on the tread side, a series of shaped reliefs (2) and internally, on the side opposite to the tread, a series of metal inserts (3) partly buried in the rubber, longitudinally aligned and projecting relative to the lying plane of the rubber structure (1), said metal inserts (3) acting as stiff supports for the rollers (4) carrying the vehicle weight and enabling the propulsion carried out by the crawler wheel (5), characterized in that each of said metal inserts (3) consists of a body comprising two substantially plate-like elements (6) disposed longitudinally to the track extension and at right angles to the lying plane of said rubber structure (1), said elements (6) being disposed parallel to one another in side by side relation and joined by a substantially cylindrical connecting element (7) perpendicular thereto, each pair of said elements (6) forming said metal insert (3) exhibiting two first flaps (9) close and parallel to each other and extending in the longitudinal direction from one side of said insert (3), and two second flaps (10) parallel to and spaced apart from each other and extending in the longitudinal direction from the opposite side of said insert (3), said first two close flaps (9) of an insert (3) being disposed between said second two spaced flaps (10) of the adjacent insert (3) so as to form a continuous support surface for said rollers.

2. A rubber track for vehicles according to claim 1, characterized in that formed between two adjacent metal inserts (3) in said rubber structure (1) is a substantially cross-shaped hole (11).

FIG. 1

FIG. 2

FIG. 3

FIG. 4

FIG. 5

European Patent
Office

**EUROPEAN SEARCH REPORT**

Application Number

EP 91 83 0515

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 118 912 (BRIDGESTONE TIRE COMPANY LTD.) * page 5, line 2 - line 33; figures 3,4 * | 1 | B62D55/24 B62D55/20 |
| A | | 2 | |
| Y | US-A-2 330 786 (E. L. ALLEN AND H. B. MUSTER) * page 2, left column, line 16 - right column, line 12; figures 1-4 * | 1 | |
| A | GB-A-845 515 (ATKINSON α S AGRICULTURAL APPLIANCES LTD.) * page 2, line 78 - page 3, line 30; figures 1,2 * | 1 | |

TECHNICAL FIELDS
SEARCHED (Int. Cl.5 )

B62D

The present search report has been drawn up for all claims

| Place of search | Date of completion of the search | Examiner |
|---|---|---|
| THE HAGUE | 28 FEBRUARY 1992 | CHLOSTA P. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)